# FASCICULE DE BREVET EUROPEEN

(11) **EP 3 367 304 B1**
(45) Date de publication et mention de la délivrance du brevet: **06.04.2022**
(21) Numéro de dépôt: 18158476.4
(22) Date de dépôt: 23.02.2018
(51) Int. Cl.: G06K 9/00, G06F 21/31

(54) **PROCÉDÉ ET DISPOSITIF DE RECONNAISSANCE D'UN INDIVIDU PAR SIGNATURE BIOMÉTRIQUE**
PERSONENERKENNUNGSVERFAHREN UND -VORRICHTUNG ANHAND DER BIOMETRISCHEN SIGNATUR
METHOD AND DEVICE FOR RECOGNISING A PERSON BY BIOMETRIC SIGNATURE

(30) Priorité: 27.02.2017 FR 1751591
(43) Date de publication de la demande: 29.08.2018
(73) Titulaire: Idemia Identity & Security France, 92400 Courbevoie (FR)
(72) Inventeur: THIEBOT, Alain, 92130 ISSY-LES-MOULINEAUX (FR); POUET, Marina, 92130 ISSY-LES-MOULINEAUX (FR); FOURRE, Joël-Yann, 92130 ISSY-LES-MOULINEAUX (FR)
(74) Mandataire: Chauvin, Karen Laurence

(56) Documents cités:
- EP-A1- 2 511 872
- EP-A2- 1 288 845
- WO-A2-2005/043451
- FR-A1- 2 862 785
- US-B2- 8 941 466
- A. ANTONELLI ET AL: "Fake Finger Detection by Skin Distortion Analysis", IEEE TRANSACTIONS ON INFORMATION FORENSICS AND SECURITY, vol. 1, no. 3, 1 septembre 2006 (2006-09-01), pages 360-373, XP055007996, ISSN: 1556-6013, DOI: 10.1109/TIFS.2006.879289
- FREIRE-SANTOS M ET AL: "Cryptographic key generation using handwritten signature", VISUAL COMMUNICATIONS AND IMAGE PROCESSING; 20-1-2004 - 20-1-2004; SAN JOSE,, vol. 6202, 17 avril 2006 (2006-04-17), pages 1-7, XP002478775, DOI: 10.1117/12.665875 ISBN: 978-1-62841-730-2
- NANDAKUMAR KARTHIK ET AL: "Hardening Fingerprint Fuzzy Vault Using Password", 27 août 2007 (2007-08-27), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047467731, ISSN: 0302-9743 ISBN: 978-3-642-40759-8 * le document en entier *
- ALISHER KHOLMATOV ET AL: "Biometric Cryptosystem Using Online Signatures", 1 janvier 2006 (2006-01-01), COMPUTER AND INFORMATION SCIENCES - ISCIS 2006 LECTURE NOTES IN COMPUTER SCIENCE;;LNCS, SPRINGER, BERLIN, DE, PAGE(S) 981 - 990, XP019047053, ISBN: 978-3-540-47242-1 * le document en entier *

## Description

La présente invention concerne le domaine de la reconnaissance d'individus par exemple à des fins de contrôle d'identité ou de contrôle d'accès. Une utilisation possible concerne le contrôle d'accès à un lieu, tel que la zone d'embarquement d'un aéroport, ou à une machine, telle qu'un ordinateur ou un téléphone de type smartphone, ou à un ensemble de machines tel qu'un réseau informatique.

### ETAT DE LA TECHNIQUE

Depuis très longtemps, il est connu d'authentifier un individu à partir de sa signature apposée au bas de documents d'identité, de titres de paiement, de contrats...

Il existe des dispositifs électroniques de reconnaissance de signatures manuscrites, comprenant par exemple un capteur optique relié à une unité de commande agencée pour comparer une image de la signature optique d'un candidat à la reconnaissance et des images préenregistrées de signatures de personnes. Le déverrouillage d'un terminal à écran tactile, comme un smartphone ou une tablette tactile, par le contrôle d'une forme de signature manuscrite réalisée sur sa surface tactile est maintenant une pratique courante.

En parallèle, il a été envisagé de reconnaître un individu à partir de caractéristiques biométriques comme ses empreintes digitales.

Il existe là aussi des dispositifs électroniques de reconnaissance d'empreintes digitales, comprenant par exemple un capteur d'empreintes digitales relié à une unité de commande agencée pour comparer des caractéristiques d'une empreinte digitale d'un candidat à la reconnaissance et des caractéristiques préenregistrées d'empreintes digitales de personnes enrôlées.

Le document EP1288845 A2 présente un dispositif de reconnaissance d'empreinte digitale lors de l'acquisition d'une signature.

Le document EP2511872 A1 divulgue un dispositif de discernement de doigt falsifié basé sur la déformation de l'empreinte digitale.

Ces deux types de dispositifs de reconnaissance sont utilisés indépendamment l'un de l'autre.

### OBJET DE L'INVENTION

Un but de l'invention est de fournir un moyen pour renforcer la reconnaissance d'individu.

### BREF EXPOSE DE L'INVENTION

A cet effet, on prévoit, selon l'invention, un procédé de reconnaissance d'individus au moyen d'au moins un processeur exécutant un algorithme de reconnaissance, comprenant les étapes de :
- faire réaliser une signature manuscrite par au moins un candidat à la reconnaissance, le candidat utilisant au moins l'un de ses doigts appliqué contre une surface de capture ;
- détecter des caractéristiques biométriques de l'empreinte digitale du candidat lors de la réalisation de la signature manuscrite, au moins l'une des phases de capture est effectuée alors que le doigt est en mouvement ;
- extraire les caractéristiques de la signature réalisée et les caractéristiques biométriques de l'empreinte digitale pour former des données de signature et des données biométriques d'empreinte du candidat ;
- comparer les données de signature et les données biométriques du candidat à des données de signature et des données biométriques digitales qui sont stockées sur un support de données et qui appartiennent à au moins un individu et comparer les données biométriques correspondant à deux phases de capture pour révéler une distorsion des caractéristiques biométriques entre les deux phases de capture.

Par signature manuscrite, on entend un motif ou une suite manuscrite de lettres et/ou de chiffres qui est reproductible par un individu et permet d'identifier l'individu à partir de la manière dont la signature manuscrite a été tracée par l'individu. Ainsi, la reconnaissance est basée à la fois sur des caractéristiques physiques des individus (leurs empreintes digitales) et sur des connaissances propres des individus (leur signature manuscrite). La reconnaissance est donc plus fiable et ne prend sensiblement pas plus de temps que le contrôle de signature seule puisque les caractéristiques biométriques sont détectées pendant la réalisation de signature, au moyen du même capteur et sans étape ou contrainte supplémentaire pour l'utilisateur. Le procédé de l'invention permet en outre de limiter le risque de fraude d'un système de reconnaissance d'empreinte digitale. En effet, les deux techniques de fraude les plus répandues consistent pour l'une à recouvrir l'extrémité du doigt du fraudeur avec une pellicule sur laquelle a été reproduite une empreinte et pour l'autre à réaliser un faux doigt à l'extrémité duquel a été reproduite une empreinte. Dans le premier cas, le frottement de la pellicule contre la surface de signature tend à détériorer la pellicule et donc l'empreinte qu'elle porte. Dans le deuxième cas, il est difficile de reproduire avec un faux doigt le mouvement de signature (variations de vitesse et de pression du doigt sur la surface de signature par exemple). Dans les deux cas, les différences de propriétés mécaniques entre la peau et les matériaux de fraude entraîneront des déformations différentes et détectables sur les empreintes digitales acquises pendant la réalisation de la signature. Enfin, la signature fournit des caractéristiques révocables ou modifiables, au contraire des caractéristiques biométriques qui sont immuables. Le chiffrage/déchiffrage des données biométriques conditionné par la vérification préalable de la signature manuscrite offre une meilleure sécurisation des données biométriques et une révocation aisée de l'ensemble des deux données.

L'invention a également pour objet un dispositif de détection de caractéristiques biométriques, comprenant un capteur ayant une surface de capture, le capteur ayant une vitesse d'acquisition suffisante pour permettre la capture de caractéristiques biométriques sur une extrémité d'un doigt réalisant une signature sur la surface de signature. Le dispositif comprend une unité de traitement pour coder et mémoriser des données de signature correspondant à la signature et des données biométriques correspondant aux caractéristiques biométriques capturées et pour mettre en œuvre le procédé ci-dessus.

Ainsi, un capteur d'empreinte fonctionnant par exemple à 30 images par seconde et ayant un temps d'intégration de 5 ms produira des images permettant l'extraction des caractéristiques biométrique sans dégradation importante des performances pour des doigts en mouvement avec une vitesse inférieure à 0,1 m/seconde. Les caractéristiques pourront être acquises avec une moindre qualité pour des vitesses jusqu'à 0,3 m/seconde.

D'autres caractéristiques et avantages de l'invention ressortiront à la lecture de la description qui suit de modes de réalisation particuliers non limitatifs de l'invention.

### BREVE DESCRIPTION DES FIGURES

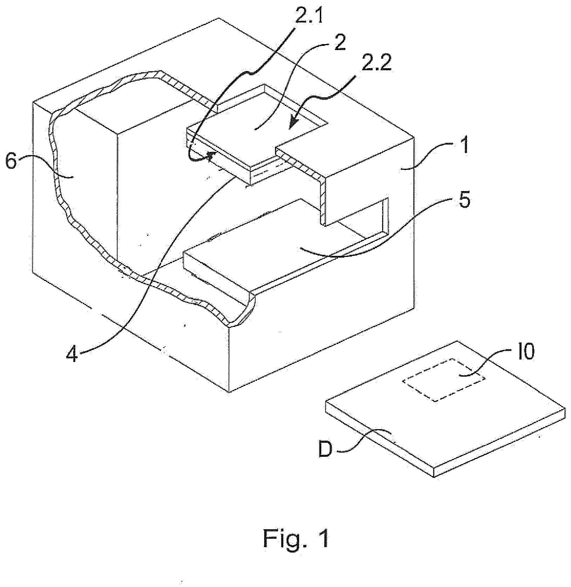

Il sera fait référence à la figure unique annexée représentant schématiquement un dispositif de détection de caractéristiques biométriques et de reconnaissance selon l'invention.

### DESCRIPTION DETAILLEE DE L'INVENTION

En référence à la figure, le dispositif selon l'invention comprend bâti 1 portant un capteur 2.

Le capteur 2 est ici un capteur TFT réalisé sous la forme d'une plaque de verre ayant une face arrière 2.1 et une face frontale 2.2. La face avant 2.2 forme la surface de capture et le capteur a une vitesse d'acquisition suffisante pour permettre la capture de caractéristiques biométriques sur une extrémité d'un doigt réalisant une signature manuscrite sur la face frontale 2.2 formant la surface de capture.

Un afficheur 4 est monté en regard de la face arrière 2.1 du capteur 2. L'afficheur 4 et le capteur 2 sont agencés de manière que le capteur 2 ne gêne pas la vision de l'afficheur 4 par un utilisateur regardant au travers du capteur 2. A cette fin, le capteur 2 est un capteur partiellement transparent. Le capteur 2 est, comme déjà dit, de type TFT, c'est-à-dire réalisé sur une plaque ici de verre par un procédé connu de microélectronique, pour qu'un espace libre soit conservé entre les pixels de telle manière qu'aucune couche métallique n'empêche la lumière de l'afficheur 4 de traverser le capteur 2. Le capteur 2 laisse passer au moins 10% de la lumière de l'afficheur 4. Lorsque le capteur 2 est un capteur optique, il est avantageusement éclairé par l'afficheur 4. Le capteur 2 peut aussi être thermique ou capacitif. Ces derniers modes de réalisation permettent dans certain cas d'utiliser des temps d'intégration inférieurs à 1 ms et donc d'autoriser des mouvements encore plus rapides du doigt.

Le dispositif comprend également un lecteur 5 de circuit intégré ici de type RFID. Ces circuits intégrés, connus en eux-mêmes, comprennent une mémoire et une antenne et sont agencés pour permettre une inscription de données dans la mémoire et une lecture des données inscrites dans la mémoire. Ces circuits intégrés IC sont ici contenus dans des documents d'identité D tels que des passeports, ou des cartes à circuit intégré. On notera qu'une partie du traitement décrit ci-après peut être réalisée par ces circuits intégrés.

Le dispositif comprend en outre une unité de traitement 6 reliée au capteur 2, à l'afficheur 4 et au lecteur 5. L'unité de traitement 6 est un serveur informatique qui comprend un processeur associé à une mémoire vive et une mémoire morte contenant un programme exécutant un algorithme de reconnaissance biométrique et de signature et mettant en œuvre un procédé de reconnaissance d'individus selon l'invention.

Le procédé de l'invention autorise deux modes de fonctionnement du dispositif :
- dans un premier mode de fonctionnement, la reconnaissance est effectuée à partir de données de signature et de données biométriques qui appartiennent à plusieurs individus et qui sont enregistrées dans une base de données stockées dans la mémoire morte de l'unité de traitement ;
- dans un deuxième mode de fonctionnement, activé par l'introduction d'un document d'identité dans le lecteur 5, la reconnaissance est effectuée à partir de données de signature manuscrite et de données biométriques qui appartiennent à un unique individu et qui sont enregistrées dans la mémoire du document d'identité.

Le procédé comprend une opération préalable d'enrôlement comprenant les étapes de :
- faire réaliser une signature manuscrite par un individu à enrôler, l'individu utilisant au moins l'un de ses doigts appliqué contre la surface de capture ;
- détecter des caractéristiques de la signature manuscrite au cours de sa réalisation ;
- coder ces caractéristiques pour en faire des données de signature (ou données de signature de référence) et les mémoriser dans une base de données stockée dans la mémoire morte de l'unité de traitement 6 ou dans la mémoire d'un circuit IC d'un document D, ou les deux, selon le mode de fonctionnement envisagé ;
- détecter des caractéristiques biométriques du ou des doigts de l'individu ;
- coder les caractéristiques biométriques pour former des données biométriques de l'individu (ou données biométriques de référence) et les mémoriser dans la base de données stockée dans la mémoire morte de l'unité de traitement 6 ou dans la mémoire d'un circuit IC d'un document D, ou les deux, selon le mode de fonctionnement envisagé.

La base de données de la mémoire morte de l'unité de traitement 6 met en relation, pour chacun des individus enrôlés : un identifiant de l'individu, les données de signature, les données biométriques et, éventuellement, des droits associés à l'individu.

Les données de signature comprennent la forme générale de la signature manuscrite et au moins l'une des données suivantes :
- donnée d'accélération du doigt sur au moins une portion de la signature,
- donnée de pression du doigt contre la surface de signature sur au moins une portion de la signature,
- donnée de forme du doigt.

Les droits associés comprennent par exemple :
- une autorisation totale ou limitée de circuler,
- une autorisation d'accès à des documents...

Lors de l'enrôlement, les caractéristiques biométriques peuvent être capturées :
- pendant au moins une phase de déplacement du doigt à faible vitesse (cette vitesse pouvant être presque nulle, le doigt se trouvant alors dans un état de quasi immobilité) lors de la réalisation de la signature ;
- pendant plusieurs phases de capture au cours de la réalisation de la signature manuscrite ou sensiblement en continu pendant la réalisation de la signature manuscrite.

Au moins l'une des phases de capture est effectuée alors que le doigt est en mouvement. De préférence, le capteur est agencé de telle manière que la capture soit exploitable tant que la vitesse du doigt n'est pas supérieure à 0,3 m/s.

Le procédé comprend alors l'étape de comparer les données biométriques à deux instants distincts au cours de la réalisation de la signature manuscrite pour révéler une distorsion des caractéristiques biométriques entre les deux instants de capture. De manière classique dans un traitement d'empreinte digitale, les images sont mises en correspondance au mieux. Si l'on utilise les minuties pour la comparaison, ceci peut être fait en mettant en correspondance une minutie de chaque acquisition de telle façon que cette mise en correspondance produise la meilleure concordance des autres minuties. Selon l'invention, on va utiliser les vecteurs de déplacement associés à chaque couple de minuties se correspondant entre les deux acquisitions pour constituer un champ de distorsion. Il peut alors optionnellement être approché par un modèle paramétrique dont on conservera les paramètres. En variante, on peut se contenter de vérifier qu'il y a une distorsion suffisante, c'est-à-dire vérifier que, pour des vecteurs suffisamment éloignés (au-delà d'un premier seuil) du point mis en correspondance, le déplacement est supérieur à un deuxième seuil.

Une capture de qualité suffisante des caractéristiques biométriques en mouvement est ici obtenue en utilisant un capteur 2 ayant une résolution fine, ici 500 dpi, et un temps d'intégration relativement court au regard de la vitesse maximale de déplacement d'un doigt lors de la réalisation d'une signature manuscrite. En variante, il est possible de déterminer le temps d'intégration au regard d'une vitesse moyenne de réalisation d'une signature manuscrite, ou même au regard d'une vitesse inférieure (la capture des caractéristiques biométriques durant les périodes de déplacement les plus « lents » de la réalisation de la signature manuscrite).

Le procédé comprend en outre une opération de reconnaissance. Le dispositif est agencé pour détecter la présence d'un doigt sur la surface de capture : le premier mode de fonctionnement est activé lorsqu'aucun document d'identité n'a été préalablement introduit dans le lecteur 5 et le deuxième mode de fonctionnement est activé lorsqu'un document d'identité a été préalablement introduit dans le lecteur 5.

Lors de l'opération de reconnaissance, le procédé comprend les étapes de :
- faire réaliser une signature par au moins un candidat à la reconnaissance, le candidat utilisant au moins l'un de ses doigts appliqué contre la surface de capture ;
- détecter des caractéristiques biométriques du ou des doigts du candidat lors de la réalisation de la signature manuscrite, au moins l'une des phases de capture est effectuée alors que le doigt est en mouvement ;
- faire coder par l'algorithme la signature manuscrite réalisée et les caractéristiques biométriques pour former des données de signature et des données biométriques du candidat ;
- faire comparer par l'algorithme les données de signature et les données biométriques du candidat aux données de signature et aux données biométriques digitales qui ont été préalablement enregistrées lors de l'opération d'enrôlement et faire comparer les données biométriques correspondant aux deux phases de capture pour révéler une distorsion des caractéristiques biométriques entre les deux phases de capture.

Avantageusement, les données biométriques peuvent être protégées par les données de signature manuscrite. Ainsi, une clef de chiffrement peut être générée, par un procédé connu, lors de l'enrôlement et associée aux données de signature de référence de l'individu en cours d'enrôlement. Les données biométriques de référence sont chiffrées par cette clé puis stockées chiffrées. Ainsi, lors d'une comparaison positive de la signature manuscrite et des données de signature de référence, la clef de chiffrement correspondant auxdites données de signature de référence est retrouvée et permet de déchiffrer les données biométriques de référence stockées pour réaliser ensuite la comparaison biométrique. Les données biométriques sont ainsi inaccessibles tant qu'une comparaison positive des données de signature n'a pas été réalisée. Un tel procédé de récupération d'une clé de chiffrement est par exemple connu sous l'appellation « fuzzy vault » comme décrit dans l'article « Cryptographie Key Génération Using Handwritten Signature », M. FREIRE-SANTOS et al., Proc. of SPIE, Vol. 6202, 62020N, 2006. L'utilisation des données de signature pour accéder aux données biométriques permet en outre de répudier ces données.

En variante, il est possible de générer directement une clé de chiffrement à partir de données de signature manuscrite. La production d'une telle clé de chiffrement est effectuée à partir de procédés connus. A titre d'exemple, lors de l'enrôlement de l'individu, on générera à partir des données de signature manuscrite, une clé de chiffrement et un code correcteur comme décrit dans la thèse « Robust Techniques for Evaluating biometric Cryptographie Key Generators », Lucas Kevin BALLARD, Baltimore, Maryland, Mars 2008. Lors des acquisitions suivantes, les données de signature associées au code correcteur d'erreur permettront de générer la même clé de chiffrement.

Dans le premier mode de fonctionnement, les données de signature et les données biométriques du candidat sont comparées aux données de signature et aux données biométriques digitales qui ont été préalablement enregistrées dans la mémoire morte de l'unité de traitement 6.

Dans le deuxième mode de fonctionnement, les données de signature et les données biométriques du candidat sont comparées aux données de signature et aux données biométriques digitales qui ont été préalablement enregistrées dans la mémoire du circuit 10 du document d'identité D.

Les caractéristiques de la signature et les caractéristiques biométriques sont détectées au cours de la réalisation de la signature manuscrite. L'afficheur 4 disposé derrière le capteur 2 est piloté par l'unité de traitement 6 pour afficher la signature au fur et à mesure de la réalisation de celle-ci.

On notera que comme l'empreinte est capturée sur un doigt en mouvement en appui contre une surface, l'empreinte est déformée du fait de la souplesse de la pulpe du doigt. Il est donc nécessaire d'en tenir compte lors du traitement des caractéristiques biométriques de telle manière que les données biométriques issue de la réalisation de sa signature d'un individu puissent être correctement rapprochées de celles de ce même individu qui seraient enregistrées dans la base de données. On notera que, si l'empreinte n'est pas déformée pendant la signature, on est vraisemblablement en présence d'une tentative de fraude au moyen d'une image d'empreinte simplement déplacée sur la surface de signature pour reproduire la signature. Pour encore limiter le risque de fraude, il est intéressant de vérifier si, pendant la réalisation de la signature, l'empreinte n'est pas déformée d'une façon trop différente comparée à l'acquisition de référence, ce qui est le signe d'une tentative de fraude à l'aide d'un matériau trop souple ou trop rigide comparé au doigt de référence. On prévoit donc lors de l'enrôlement de déterminer et enregistrer des vecteurs de déformation de l'empreinte lors de la réalisation de la signature pour pouvoir, lors d'une phase ultérieure de reconnaissance, comparer aux vecteurs de déformations enregistrés des vecteurs déformation détectés au cours de la réalisation de la signature par un candidat.

De manière plus pratique, on pourra mesurer la distorsion par rapport à une des images de la séquence de signature (ou par rapport à une des images de référence). On pourra quantifier les distorsions pour les comparer à des seuils. On peut obtenir des résultats similaires en utilisant plusieurs gabarits biométriques lors de l'enrôlement et en vérifiant que les similarités maximales remontées par l'algorithme de comparaison correspondent bien à des périodes identiques de réalisation de la signature manuscrite. Afin de garantir de bonnes performances, il sera aussi avantageux d'utiliser plusieurs gabarits de référence obtenus dans des conditions telles qu'il y ait de la distorsion entre eux. Ceci permet d'avoir pour une acquisition distordue un des gabarits de référence pour lequel les distorsions seront plus modérées de manière à produire ainsi un meilleur score de comparaison.

En variante, pour vérifier l'absence de tentative de fraude avant même d'accéder aux données stockées, il est intéressant de vérifier la cohérence entre l'évolution de la distorsion et les variations de vitesses et de directions de déplacement du doigt lors de la signature manuscrite. Ainsi, le Procédé comprend les étapes de :
- comparer des caractéristiques biométriques capturées juste avant et des caractéristiques biométriques capturées juste après un changement de vitesse et/ou de direction du doigt lors de la réalisation de la signature pour déterminer une distorsion des caractéristiques biométriques lors du changement de vitesse et/ou de direction, et
- comparer la distorsion à un seuil minimal et à un seuil maximal en vue de vérifier que cette distorsion est compatible avec un doigt réel.

On comparera les caractéristiques biométriques juste avant et juste après des moments de plus grande variation vitesse de déplacement et/ou de direction dans la séquence de signature manuscrite, pour vérifier qu'auxdits moments correspondent des variations de distorsions plus élevées de l'empreinte digitale. Ces variations devront être supérieures à un seuil minimum, mais quand même bornées par un maximum, et dans la direction attendue par rapport au déplacement du doigt. Ces minimum et maximum de distorsions, ainsi que les directions, sont déterminés par apprentissage sur des bases de données acquises avec le dispositif de l'invention. Minimum et maximum peuvent être soit absolus soit dépendant de la variation locale de la vitesse et de la direction du déplacement lors de la signature manuscrite cette relation ayant également été établie lors des apprentissages sur données réelles.

On comprend que, dans le cas d'une fraude utilisant un faux doigt, la déformation du faux doigt engendrée par les changements de vitesse et/ou de direction, et donc la distorsion de l'empreinte digitale du faux doigt, dépendent du matériau du faux doigt. Trop souple, la distorsion sera supérieure à la distorsion attendue ; trop dur, la distorsion sera inférieure à la distorsion attendue.

Bien entendu, l'invention n'est pas limitée aux modes de réalisation décrits mais englobe toute variante entrant dans le champ de l'invention telle que définie par les revendications.

En particulier, la signature peut consister en la qualité ou la fonction d'un individu. Par exemple, pour l'accès à un réseau informatique, on peut prévoir que le serveur demande à l'utilisateur d'inscrire sur la surface d'acquisition du capteur en quelle qualité, administrateur ou utilisateur, il souhaite se connecter au réseau. Il faut au préalable que l'utilisateur ait été enrôlé, c'est-à-dire que soient enregistrées sur le serveur des données de signature correspondant à la manière dont sont écrits par l'utilisateur les mots administrateur et/ou utilisateur et des données biométriques digitales correspondant au doigt qu'emploie l'utilisateur pour signer. On notera qu'un même individu peut avoir plusieurs qualités. On peut prévoir également que les signatures soient associées à des caractéristiques biométriques de doigts différents.

Le support de données peut contenir, pour un même individu, des données de signature correspondant à plusieurs signatures manuscrites et des données biométriques digitales correspondant à plusieurs doigts. Ainsi, une « identité », ou une fonction, ou des droits, de l'utilisateur peuvent être associés à chaque couple signature manuscrite / empreinte. Il est possible également d'avoir une seule identité pour plusieurs couples signature manuscrite / empreinte pour permettre de signer indifféremment avec plusieurs doigts et ainsi être reconnu lorsqu'un doigt est blessé. De même on pourra avoir plusieurs identités pour une même biométrie (mais des signatures différentes). L'invention est particulièrement intéressante car elle permet une séparation de l'identité vis-à-vis de la biométrie de l'individu. Un individu pourra ainsi choisir l'identité qu'il utilise et abandonner une identité précédente en changeant de signature.

Il peut être prévu un changement périodique de signature.

Pour réaliser le capteur, plusieurs possibilités existent et notamment :
- un capteur d'empreinte non modifié. Il peut s'agir d'un capteur optique à prisme ou d'un capteur plat (de type TFT, c'est-à-dire constitué de pixels déposés sur un substrat mince en verre ou en plastique, par des procédés de micro-électronique ou d'impression). Ce capteur doit cependant avoir une surface et un débit suffisants ;
- un capteur TFT partiellement transparent sous lequel est placé un écran émissif. Ceci permet d'améliorer significativement l'ergonomie de la signature en affichant une « trace » ;
- un capteur/afficheur, c'est-à-dire un substrat unique sur lequel ont été déposés des pixels d'affichage (OLED par exemple, mais aussi LCD) et des pixels de détection (optiques ou capacitifs par exemple) ;
- un capteur optique à prisme de capteur TIR ou FTIR ;
- un capteur optique imageant un doigt posé sur une lame à faces parallèles,
- un capteur à ultrasons ;
- un capteur thermique ;
- un capteur capacitif ;
- un capteur à pression.

On notera que tout capteur d'empreinte ayant une surface suffisante et une vitesse d'acquisition suffisante permet la réalisation de l'invention en lui adjoignant uniquement les logiciels nécessaires pour réaliser l'extraction des données de signature et des données biométriques, puis leur comparaison aux données de référence.

La détection de la signature peut être réalisée au moyen d'un capteur à ultrasons disposé au voisinage d'un bord de la face frontale 2.2 de la vitre transparente 2.

De préférence elle est réalisée directement par le capteur d'empreinte. Deux approches pourront alors être utilisées : Soit on exploite uniquement le barycentre et la forme de la zone de contact du doigt, soit on utilise un algorithme de comparaison d'empreinte digitale (ou tout autre algorithme de flot optique) pour suivre le mouvement du doigt en s'appuyant sur le motif de l'empreinte. Cette dernière approche permet de déterminer l'orientation du doigt pendant la signature qui constitue une information supplémentaire de la signature.

Les données de signature peuvent comprendre une donnée de pression du doigt contre la surface de signature sur au moins une portion de la signature. Cette donnée est par exemple fournie directement par un capteur de pression associé à la surface de capture. Cette donnée de pression peut être déterminée indirectement en mesurant la surface de contact du doigt avec la surface de capture. Cette donnée de pression peut ainsi être représentée par des variations de la surface de contact du doigt au cours de la réalisation de la signature manuscrite.

L'algorithme utilisé peut être scindé en deux parties : l'extraction d'un gabarit et la comparaison du gabarit avec un ou plusieurs gabarits de référence.

En variante, on peut prévoir d'avoir une base de données pour les données de signature et une base de données pour les données biométriques. En effet, un avantage important de l'invention est que l'on peut envisager de protéger les données biométriques par les données de la signature. Ceci procure alors un avantage en protégeant la donnée biométrique (donnée non répudiable) par une donnée répudiable (la signature pouvant être modifiée). Plusieurs solutions sont envisageables. Lorsque les deux bases de données sont séparées, on peut identifier l'individu à partir de la base de données de signature, puis vérifier les données biométriques de l'individu identifié (on notera que dans un tel schéma, on n'a pas utilisé de service d'identification biométrique).

En variante, les données de références pourraient être stockées sur un serveur déporté du capteur et/ou la comparaison à celles-ci pourrait être réalisée par un serveur déportée du capteur. Il faudra alors prévoir des moyens permettant de sécuriser la communication entre le capteur et le serveur.

L'afficheur n'est pas indispensable mais il est intéressant car il permet à l'utilisateur une signature plus précise et des motifs plus compliqués avec retrait et repose du doigt au bon endroit (par exemple : point sur un i).

Les caractéristiques biométriques conservées pour la comparaison sont de préférence celles capturées pendant une phase de plus faible vitesse de déplacement du doigt lors de la réalisation de la signature, cette vitesse étant nulle ou pas.

Le support de données est une mémoire incorporée à un objet de l'individu tel que : un token, une puce, un badge, un document d'identité, un téléphone mobile de type smartphone...

## Revendications

1. Procédé de reconnaissance d'individus au moyen d'au moins un processeur exécutant un algorithme de reconnaissance, comprenant les étapes de :
- faire réaliser une signature manuscrite par au moins un candidat à la reconnaissance, le candidat utilisant au moins l'un de ses doigts appliqué contre une surface de capture ;
- détecter des caractéristiques biométriques de l'empreinte digitale du candidat pendant plusieurs phases de capture au cours de la réalisation de ladite signature manuscrite, au moins l'une des phases de capture est effectuée alors que le doigt est en mouvement ;
- extraire les caractéristiques de la signature manuscrite réalisée et les caractéristiques biométriques de l'empreinte digitale pour former des données de signature et des données biométriques du candidat ;
- comparer les données de signature et les données biométriques du candidat à des données de signature et des données biométriques digitales qui sont stockées sur au moins un support de données et qui appartiennent à au moins un individu ;
**caractérisé en ce qu'**il comprend également l'étape de :
comparer les données biométriques correspondant à deux phases de capture pour révéler une distorsion des caractéristiques biométriques entre les deux phases de capture.

2. Procédé selon la revendication 1, dans lequel les caractéristiques biométriques sont capturées pendant au moins une phase de plus faible vitesse de déplacement du doigt lors de la réalisation de la signature manuscrite.

3. Procédé selon la revendication 1, dans lequel les caractéristiques biométriques sont détectées sensiblement en continu pendant la réalisation de la signature manuscrite.

4. Procédé selon la revendication 3, comprenant l'étape de déterminer des vecteurs de déformation des caractéristiques biométriques au cours de la réalisation de la signature et de comparer les vecteurs de déformation déterminés à des vecteurs de déformation enregistrés sur le support de données.

5. Procédé selon l'une quelconque des revendications précédentes, comprenant les étapes de :
- comparer des caractéristiques biométriques capturées juste avant et des caractéristiques biométriques capturées juste après un changement de vitesse et/ou de direction du doigt lors de la réalisation de la signature pour déterminer une distorsion des caractéristiques biométriques lors du changement de vitesse et/ou de direction, et
- comparer la distorsion à un seuil minimal et à un seuil maximal en vue de vérifier que cette distorsion est compatible avec un doigt réel.

6. Procédé selon l'une quelconque des revendications précédentes, dans lequel les données de signature comprennent la forme générale de la signature et au moins l'une des données suivantes :
- donnée d'accélération du doigt sur au moins une portion de la signature,
- donnée de pression du doigt contre la surface de signature sur au moins une portion de la signature,
- donnée d'orientation du doigt.

7. Procédé selon l'une quelconque des revendications précédentes, dans lequel les données biométriques de l'empreinte digitale stockées sont issues de caractéristiques biométriques de l'empreinte digitale détectées sur un doigt immobile.

8. Procédé selon l'une quelconque des revendications 1 à 7, dans lequel les données biométriques stockées sur le support de données sont issues de caractéristiques biométriques de l'empreinte digitale détectées sur un doigt en mouvement.

9. Procédé selon l'une quelconque des revendications précédentes, dans lequel le support de données est une mémoire d'un processeur mettant en œuvre une base de données contenant des données de signature et des données biométriques d'un doigt de plusieurs individus.

10. Procédé selon l'une quelconque des revendications précédentes, dans lequel le support de données est une mémoire incorporée à un objet de l'individu.

11. Procédé selon l'une quelconque des revendications précédentes, dans lequel les données biométriques sont stockées sous forme chiffrées, les données de signature étant utilisées pour constituer une clé de chiffrement des données biométriques.

12. Procédé selon l'une quelconque des revendications 1 à 10, dans lequel les données biométriques sont stockées sous forme chiffrées, les données de signature étant utilisées pour accéder à la clé de chiffrement.

13. Dispositif de détection de caractéristiques biométriques, comprenant un capteur ayant une surface de capture, le capteur ayant une vitesse d'acquisition suffisante pour permettre la capture de caractéristiques biométriques sur une extrémité d'un doigt réalisant une signature sur la surface de signature, le dispositif comprenant une mémoire pour enregistrer les caractéristiques biométriques capturées et la signature réalisée et une unité de traitement agencée pour la mise en œuvre du procédé selon l'une quelconque des revendications précédentes.

14. Dispositif selon la revendication 13, le capteur est semi-transparent et le dispositif comprend un écran disposé derrière le capteur et piloté pour afficher la signature au fur et à mesure de la réalisation de celle-ci.

## Patentansprüche

1. Verfahren zum Erkennen von Personen mittels mindestens eines Prozessors, der einen Erkennungsalgorithmus ausführt, umfassend die Schritte:
- Erstellenlassen einer handschriftlichen Signatur von mindestens einem Erkennungskandidaten, wobei der Erkennungskandidat mindestens einen seiner Finger verwendet, der gegen eine Erfassungsoberfläche gedrückt wird;
- Detektieren biometrischer Merkmale des Fingerabdrucks des Kandidaten während mehrerer Erfassungsphasen während des Erstellens der handschriftlichen Signatur, wobei mindestens eine der Erfassungsphasen durchgeführt wird, während sich der Finger bewegt;
- Extrahieren der Merkmale der erstellten handschriftlichen Unterschrift und der biometrischen Merkmale des Fingerabdrucks, um Signaturdaten und biometrische Daten des Kandidaten zu bilden;
- Vergleichen der Signaturdaten und der biometrischen Daten des Kandidaten mit Signaturdaten und biometrischen Fingerdaten, die auf mindestens einem Datenträger gespeichert sind und zu mindestens einer Person gehören;
**dadurch gekennzeichnet, dass** es außerdem den Schritt umfasst zum:
Vergleichen der biometrischen Daten, die zwei Erfassungsphasen entsprechen, um eine Verzerrung der biometrischen Merkmale zwischen den beiden Erfassungsphasen aufzudecken.

2. Verfahren nach Anspruch 1, wobei die biometrischen Merkmale während mindestens einer Phase mit geringerer Geschwindigkeit der Fingerbewegung beim Erstellen der handschriftlichen Signatur erfasst werden.

3. Verfahren nach Anspruch 1, wobei die biometrischen Merkmale während des Erstellens der handschriftlichen Signatur im Wesentlichen kontinuierlich detektiert werden.

4. Verfahren nach Anspruch 3, umfassend den Schritt des Bestimmens von Verformungsvektoren der biometrischen Merkmale während des Erstellens der Signatur und des Vergleichens der bestimmten Verformungsvektoren mit auf dem Datenträger gespeicherten Verformungsvektoren.

5. Verfahren nach einem der vorstehenden Ansprüche, umfassend die Schritte zum:
- Vergleichen von biometrischen Merkmalen, die unmittelbar vor, und von biometrischen Merkmalen, die unmittelbar nach einer Änderung der Geschwindigkeit und/oder der Richtung des Fingers beim Erstellen der Signatur erfasst wurden, um eine Verzerrung der biometrischen Merkmale bei der Änderung der Geschwindigkeit und/oder der Richtung zu bestimmen, und
- Vergleichen der Verzerrung mit einem minimalen Schwellenwert und einem maximalen Schwellenwert, um zu überprüfen, ob die Verzerrung mit einem echten Finger kompatibel ist.

6. Verfahren nach einem der vorstehenden Ansprüche, wobei die Signaturdaten die allgemeine Form der Signatur und mindestens eine der folgenden Datenangaben umfassen:
- Datenangabe zur Beschleunigung des Fingers auf mindestens einem Abschnitt der Signatur,
- Datenangabe zum Druck des Fingers gegen die Signaturoberfläche auf mindestens einem Abschnitt der Signatur,
- Datenangabe zur Ausrichtung des Fingers.

7. Verfahren nach einem der vorstehenden Ansprüche, wobei die gespeicherten biometrischen Daten des Fingerabdrucks von biometrischen Merkmalen des Fingerabdrucks abgeleitet werden, die an einem unbeweglichen Finger detektiert werden.

8. Verfahren nach einem der Ansprüche 1 bis 7, wobei die auf dem Datenträger gespeicherten biometrischen Daten von biometrischen Merkmalen des Fingerabdrucks abgeleitet werden, die an einem sich bewegenden Finger detektiert werden.

9. Verfahren nach einem der vorstehenden Ansprüche, wobei der Datenträger ein Speicher eines Prozessors ist, der eine Datenbank implementiert, die Signaturdaten und biometrische Daten eines Fingers von mehreren Personen enthält.

10. Verfahren nach einem der vorstehenden Ansprüche, wobei der Datenträger ein Speicher ist, der in einen Gegenstand der Person eingebaut ist.

11. Verfahren nach einem der vorstehenden Ansprüche, wobei die biometrischen Daten in verschlüsselter Form gespeichert werden, wobei die Signaturdaten verwendet werden, um einen Schlüssel zur Verschlüsselung der biometrischen Daten zu bilden.

12. Verfahren nach einem der Ansprüche 1 bis 10, wobei die biometrischen Daten in verschlüsselter Form gespeichert werden, wobei die Signaturdaten für den Zugriff auf den Schlüssel zur Verschlüsselung verwendet werden.

13. Vorrichtung zum Detektieren biometrischer Merkmale, umfassend einen Sensor, der eine Erfassungsoberfläche aufweist, wobei der Sensor eine Erfassungsgeschwindigkeit aufweist, die ausreicht, um die Erfassung biometrischer Merkmale an einem Ende eines Fingers zu ermöglichen, der eine Signatur auf der Signaturoberfläche erstellt, wobei die Vorrichtung einen Speicher zum Aufzeichnen der erfassten biometrischen Merkmale und der erstellten Signatur und eine Verarbeitungseinheit umfasst, die zur Durchführung des Verfahrens nach einem der vorstehenden Ansprüche eingerichtet ist.

14. Vorrichtung nach Anspruch 13, wobei der Sensor halbtransparent ist und die Vorrichtung einen Bildschirm umfasst, der hinter dem Sensor angeordnet ist und angesteuert wird, um die Signatur je nach ihrer Erstellung anzuzeigen.

## Claims

1. A method of recognizing individuals by means of at least a processor executing a recognition algorithm, comprising the steps of:
- having a handwritten signature produced by at least one candidate for recognition, the candidate using at least one of his fingers applied against a capture surface;
- detecting biometric features of the fingerprint of the candidate during several capture phases while said handwritten signature is being produced, at least one of the capture phases being carried out while the finger is in motion;
- extracting the features of the handwritten signature produced and the biometric features of the fingerprint in order to form the candidate's signature data and biometric data;
- comparing the candidate's signature data and biometric data to signature data and finger biometric data which are stored on at least a data medium and which belong to at least one individual;
**characterized in that** it also comprises the step of:
comparing the biometric data corresponding to two capture phases in order to reveal a distortion of the biometric features between the two capture phases.

2. The method according to claim 1, wherein the biometric features are captured during at least one phase of slower movement of the finger during production of the handwritten signature.

3. The method according to claim 1, wherein the biometric features are detected substantially continuously during the production of the handwritten signature.

4. The method according to claim 3, comprising the step of determining deformation vectors of the biometric features while the signature is being produced, and of comparing the determined deformation vectors to deformation vectors recorded on the data medium.

5. The method according to any one of the preceding claims, comprising the steps of:
- comparing biometric features captured just before and biometric features captured just after a change of speed and/or of direction of the finger while the signature is being produced in order to determine a distortion of the biometric features during the change of speed and/or of direction, and
- comparing the distortion to a minimum threshold and to a maximum threshold in order to verify that this distortion is compatible with a real finger.

6. The method according to any one of the preceding claims, wherein the signature data comprise the general form of the signature and at least one of the following data:
- acceleration data of the finger over at least a portion of the signature,
- pressure data of the finger against the signature surface over at least a portion of the signature,
- orientation data of the finger.

7. The method according to any one of the preceding claims, wherein the biometric data of the stored fingerprint are derived from biometric features of the fingerprint detected on a motionless finger.

8. The method according to any one of claims 1 to 7, wherein the biometric data stored on the data medium are derived from biometric features of the fingerprint detected on a finger in motion.

9. The method according to any one of the preceding claims, wherein the data medium is a memory of a processor using a database containing signature data and biometric data of a finger of several individuals.

10. The method according to any one of the preceding claims, wherein the data medium is a memory incorporated in an object of the individual.

11. The method according to any one of the preceding claims, wherein the biometric data are stored in encrypted form, the signature data being used to constitute an encryption key of the biometric data.

12. The method according to any one of claims 1 to 10, wherein the biometric data are stored in encrypted form, the signature data being used to access the encryption key.

13. A device for detecting biometric features, comprising a sensor having a capture surface, the sensor having sufficient acquisition speed to allow the capture of biometric features on an end of a finger producing a signature on the signature surface, the device comprising a memory for recording the captured biometric features and the signature produced, and a processing unit arranged to implement the method according to any one of the preceding claims.

14. The device according to claim 13, the sensor is semi-transparent and the device comprises a screen arranged behind the sensor and controlled in order to display the signature as it is being produced.
